# EUROPEAN PATENT APPLICATION

(11) **EP 3 540 337 A1**
(43) Date of publication of application: **18.09.2019**
(21) Application number: 17869709.0
(22) Date of filing: 24.10.2017
(51) Int. Cl.: F25B 27/02, F25B 17/08

(54) **CHEMICAL HEAT PUMP SYSTEM**

(30) Priority: 09.11.2016 JP 2016218768
(71) Applicant: Toyo Engineering Corporation, Tokyo 100-6511 (JP)
(72) Inventor: NAKAO Takato, Narashino-shi Chiba 275-0024 (JP); TERAI Satoshi, Narashino-shi Chiba 275-0024 (JP)
(74) Representative: Maikowski & Ninnemann Patentanwälte Partnerschaft mbB
(86) International application number: PCT/JP2017/038285
(87) International publication number: WO 2018/088195

(57) **Abstract**

Chemical heat pump system 1 includes: endothermic unit 3 that contains a slurry containing a solid product and that absorbs heat supplied from an outside to perform an endothermic reaction at first pressure P₁; exothermic unit 2 that contains a slurry containing a solid reactant and that performs an exothermic reaction at a second pressure P₂ that is higher than the first pressure P₁ to generate heat; gas recovery supply unit 4 that recovers a gas reactant that has been decomposed in endothermic unit 3 and that supplies the gas reactant to exothermic unit 2; and circulation unit 5 that supplies the slurry containing the solid reactant, that has been decomposed in endothermic unit 3, to exothermic unit 2 after pressurizing the slurry from first pressure P₁ to second pressure P₂, and that supplies the slurry containing the solid product, that has been produced in exothermic unit 2, to endothermic unit 3 after depressurizing the slurry from second pressure P₂ to first pressure P₁, so as to circulate the slurry between endothermic unit 3 and exothermic unit 2.

## Description

### Technical Field

The present invention relates to a chemical heat pump system based on a reversible reaction between a gas and a solid.

### Background Art

In recent years, a chemical heat pump system and a chemical heat storage system, based on a reversible reaction between a gas and a solid, have attracted attention as a heat recovery and utilization system for recovering and utilizing exhaust heat of factories and power plants. These systems are based on an exothermic reaction that produces a solid product from a solid reactant and a gas reactant and an endothermic reaction that decomposes the solid product into the solid reactant and the gas reactant, and are expected to be used in a wide range of fields due to a wide operating temperature range (for example, see Patent Literatures 1-4).

### Citation List

### Patent Literature

Patent Literature 1: JP 2011-190947 A
Patent Literature 2: JP 2013-019592 A
Patent Literature 3: JP 2015-183984 A
Patent Literature 4: JP 2012-163264 A

### Summary of the Invention

### Technical Problem

Although the above-described chemical heat pump system and chemical heat storage system have the advantage of a wide operating temperature range, they also have the problem of difficulty of achieving an efficient and stable heat transfer with respect to the outside due to volume expansion of solid materials during the exothermic reaction and pulverization of solid materials resulting from volume contraction during the endothermic reaction. For example, the volume expansion during the exothermic reaction may necessitate special or complex reactors to improve heat transfer efficiency, and the pulverization during the endothermic reaction may lead to a reduction in output power over time.

Further, the chemical heat pump system typically comprises a batch-type reactor that alternately performs the exothermic and endothermic reactions. In this case, in order to continuously operate the system, the exothermic and endothermic reactions must be respectively performed in the two reactors in an alternating manner. However, heat loss occurs when switching between the reactions, and therefore it is difficult to continuously and stably extract heat from the system.

It is therefore an object of the present invention to provide a chemical heat pump system capable of continuous operation with good efficiency and stability.

### Solution to Problem

To achieve the above-described object, a chemical heat pump system of the present invention is a chemical heat pump system based on an exothermic reaction that produces a solid product from a solid reactant and a gas reactant and an endothermic reaction that decomposes the solid product into the solid reactant and the gas reactant; the chemical heat pump system including: an endothermic unit that contains a slurry of the solid product and that absorbs heat supplied from an outside to perform the endothermic reaction at a first pressure; an exothermic unit that contains a slurry of the solid reactant and that performs the exothermic reaction at a second pressure that is higher than the first pressure to generate heat; a gas recovery/supply unit that recovers the gas reactant that has been decomposed in the endothermic unit and that supplies the recovered gas to the exothermic unit; and a circulation unit that supplies the slurry of the solid reactant, that has been decomposed in the endothermic unit, to the exothermic unit after pressurizing the slurry from the first pressure to the second pressure, and that supplies the slurry of the solid product, that has been produced in the exothermic unit, to the endothermic unit after depressurizing the slurry from the second pressure to the first pressure, so as to circulate the slurry between the endothermic unit and the exothermic unit.

According to this chemical heat pump system, the exothermic and endothermic reactions are performed in the slurry, and therefore an efficient and stable heat transfer with respect to the outside can be achieved through the slurry. In addition, the circulation of the slurry allows the exothermic and endothermic reactions to be performed continuously and stably, and as a result heat can be extracted from the system continuously and stably.

### Advantageous Effects of Invention

As described above, the present invention can provide a chemical heat pump system capable of continuous operation with good efficiency and stability.

### Brief Description of the Drawings

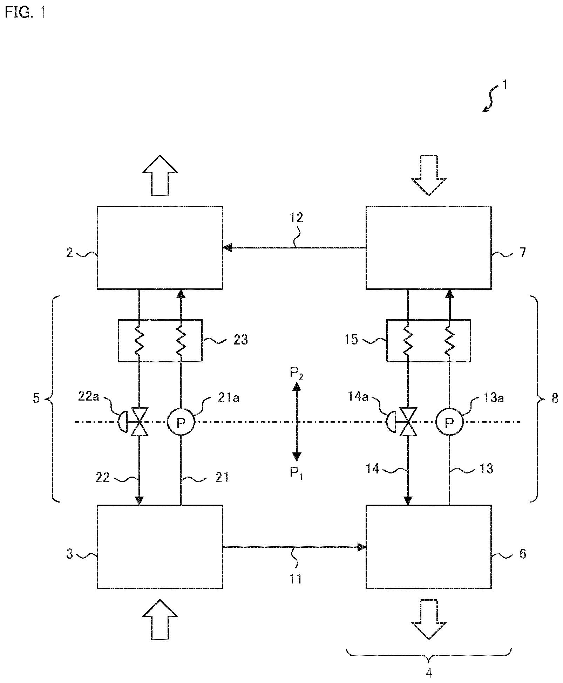

FIG. 1 is a schematic view showing the configuration of a heat recovery and utilization system according to an embodiment of the present invention.

### Description of Embodiments

Hereinafter, an embodiment of the present invention will be described with reference to the drawings.

A heat recovery and utilization system of the present invention is a system based on a reversible reaction between a gas and a solid, more specifically, an exothermic reaction that produces a solid product from a solid reactant and a gas reactant and an endothermic reaction that decomposes the solid product into the solid reactant and the gas reactant, and can be used either as a chemical heat pump system or as a chemical heat storage system, depending on purposes and applications. A reaction system used in the present invention is not particularly limited, and a suitable reaction system can be selected according to a target temperature range. For example, in a case where the temperature of heat that is to be recovered (exhaust heat) is about 100-200°C, a reaction system containing ammonia gas as a gas reactant, such as ammonia complexation reaction of a metal halide, or a reaction system containing water vapor, such as hydration reaction of an inorganic oxide, can be used.

FIG. 1 is a schematic view showing the configuration of the heat recovery and utilization system according to an embodiment of the present invention.

Referring to FIG. 1, heat recovery and utilization system 1 includes exothermic unit 2, endothermic unit 3, gas recovery/supply unit 4, and circulation unit 5. The configuration of each unit will be described below.

### (Exothermic Unit)

Exothermic unit 2 is a unit that contains a slurry containing the solid reactant and that performs the above-described exothermic reaction, i.e., a reaction that, in the slurry, produces the solid product from the gas reactant and the solid reactant to generate heat.

The slurry containing the solid reactant is formed by suspending/dispersing a solid, such as a granular solid reactant, in a liquid phase. A Liquid used as the liquid phase is not particularly limited as long as it can form a slurry in which a granular solid is suspended/dispersed, and, for example, a hydrocarbon liquid such as 1-heptanol or 1-pentanol or an ionic liquid can be used. The proportion and particle size of the solid contained in the slurry are not limited to any specific proportion and particle size, and can be appropriately set according to the selected solid.

### (Endothermic Unit)

Endothermic unit 3 is a unit that contains a slurry containing the solid product and that absorbs heat from the outside to perform the above-described endothermic reaction, i.e., a reaction that, in the slurry, decomposes the solid product into the solid reactant and the gas reactant.

The slurry containing the solid product is formed by suspending/dispersing a solid, such as a granular solid product, in a liquid phase. A Liquid used as the liquid phase is not particularly limited as long as it can form a slurry in which a granular solid is suspended/dispersed, and, for example, a hydrocarbon liquid such as 1-pentanol or 1-heptanol or an ionic liquid can be used. The proportion and particle size of the solid contained in the slurry are not limited to any specific proportion and particle size, and can be appropriately set according to the selected solid. The liquid used as the liquid phase of the slurry contained in endothermic unit 3 is preferably the same as the liquid used as the liquid phase of the slurry contained in exothermic unit 2.

### (Gas Recovery/Supply Unit)

Gas recovery/supply unit 4 is a unit that recovers the gas reactant that has been decomposed in endothermic unit 3 and that supplies the gas reactant to exothermic unit 2, and it is connected to endothermic unit 3 through gas recovery line 11 and connected to exothermic unit 2 through gas supply line 12.

Gas recovery/supply unit 4 includes gas recovery unit 6, gas supply unit 7, and transfer unit 8. Gas recovery unit 6 is a unit that recovers, as a liquid or slurry, the gas reactant that has been decomposed in endothermic unit 3, and gas supply unit 7 is a unit that supplies, as a gas, the gas reactant that has been recovered as a liquid or slurry in gas recovery unit 6 to exothermic unit 2. Transfer unit 8 is a unit that transfers the gas reactant that has been recovered as a liquid or slurry in gas recovery unit 6 to gas supply unit 7.

Gas recovery unit 6 contains a liquid or slurry capture element for physically or chemically capturing the gas reactant. Such a capture element is not particularly limited to any specific element, but in this embodiment, an absorbing liquid for absorbing the gas reactant or a liquid or slurry adsorbent for adsorbing the gas reactant is preferably used. The types of absorbing liquid and adsorbent are not particularly limited, and can be appropriately selected according to the gas reactant used. On the other hand, as the capture element, a liquid or slurry reactant can be used that reacts with the gas reactant to produce a liquid or slurry product. An example of such a reactant includes a solid reactant that is different from the above-described solid reactant and that reacts with the gas reactant in the same way as the above-described solid reactant.

In a case where the capture element is an absorbing liquid, gas recovery unit 6 recovers the gas reactant by absorbing it into the absorbing liquid, and gas supply unit 7 separates the gas reactant from the absorbing liquid and then supplies it to exothermic unit 2. In a case where the capture element is a liquid or slurry adsorbent, gas recovery unit 6 recovers the gas reactant by adsorbing it to the adsorbent, and gas supply unit 7 desorbs the gas reactant from this adsorbent and then supplies it to exothermic unit 2. In a case where the capture element is a liquid or slurry gas reactant recovery unit 6 recovers the gas reactant by reaction of it with the reactant to produce a liquid or slurry product, and gas supply unit 7 decomposes the product into the gas reactant and then supplies it to exothermic unit 2. Regardless of what type of capture element is used, the recovery of gas reactant by gas recovery unit 6 is accompanied by a release of heat (energy), and the supply of gas reactant by gas supply unit 7 is accompanied by an absorption of heat (energy).

Transfer unit 8 includes transfer line 13, transfer pump 13a, return line 14, and return valve 14a. Transfer line 13 is a line that transfers the capture element that has recovered the gas reactant in gas recovery unit 6 to gas supply unit 7, and transfer pump 13a is provided in transfer line 13. Return line 14 is a line that returns the capture element that has released the gas reactant in gas supply unit 7 to gas recovery unit 6, and return valve 14a is provided in return line 14.

At least one from among transfer pump 13a and return valve 14a has the function of adjusting the circulation amount of the capture element circulating between gas recovery unit 6 and gas supply unit 7. Transfer pump 13a and return valve 14a also have the function of adjusting the pressure of the circulating capture element, as will be described below. More specifically, transfer pump 13a has the function of pressurizing, to a predetermined pressure, the capture element being transferred from gas recovery unit 6 to gas supply unit 7 through transfer line 13, and return valve 14a has the function of depressurizing, to a predetermined pressure, the capture element being returned from gas supply unit 7 to gas recovery unit 6 through return line 14.

Further, transfer unit 8 may include heat exchanger 15 that exchanges heat between the capture element flowing through transfer line 13 and the capture element flowing through return line 14.

Gas recovery/supply unit 4 is not limited to the above-described configuration as long as it can recover the gas reactant as a liquid or slurry and supply the gas reactant thus recovered as a gas. In other words, gas recovery unit 6 and gas supply unit 7 are not respectively limited to the above-described configurations. For example, gas recovery unit 6 may include, instead of the above-described recovery elements, a condenser that recovers the gas reactant by condensing and liquifying it. In this case, gas supply unit 7 may include an evaporator that evaporates the condensed gas reactant, and return line 14 need not necessarily be provided. Gas recovery/supply unit 4 may be a unit such as a compressor that pressurizes the gas reactant that has been decomposed in endothermic unit 3 in a gas state and then supplies the gas reactant to exothermic unit 2. However, from the viewpoint of enabling a reduction in power required for pressurization, gas recovery/supply unit 4 preferably comprise gas recovery unit 6 and gas supply unit 7 as described above.

Although not shown in the figure, gas supply line 12 may be provided with a valve that adjusts, to a desired flow rate, the flow rate of the gas reactant flowing through gas supply line 12.

### (Circulation Unit)

Circulation unit 5 is a unit that supplies the slurry containing the solid reactant, that has been decomposed in endothermic unit 3, to exothermic unit 2 and that supplies the slurry containing the solid product, that has been produced in exothermic unit 2, to endothermic unit 3, so as to circulate the slurry between exothermic unit 2 and endothermic unit 3.

Circulation unit 5 includes first circulation line 21, circulation pump 21a, second circulation line 22, and circulation valve 22a. First circulation line 21 is a line that supplies the slurry containing the solid reactant that has been decomposed in endothermic unit 3, to exothermic unit 2, and circulation pump 21a is provided in first circulation line 21. Second circulation line 22 is a line that supplies the slurry containing the solid product that has been produced in exothermic unit 2, to endothermic unit 3, and circulation valve 22a is provided in second circulation line 22.

At least one from among circulation pump 21a and circulation valve 22a has the function of adjusting the circulation amount of the slurry circulating between exothermic unit 2 and endothermic unit 3. Circulation pump 21a and circulation valve 22a also have the function of adjusting the pressure of the circulating slurry, as will be described below. More specifically, circulation pump 21a has the function of pressurizing, to a predetermined pressure, the slurry of the solid reactant being supplied from endothermic unit 3 to exothermic unit 2 through first circulation line 21, and circulation valve 22a has the function of depressurizing, to a predetermined pressure, the slurry of the solid product being supplied from exothermic unit 2 to endothermic unit 3 through second circulation line 22.

Further, circulation unit 5 may include a heat exchanger 23 that exchanges heat between the slurry of the solid reactant flowing through first circulation line 21 and the slurry of the solid product flowing through second circulation line 22.

### (Heat Pump Mode)

An operating mode when the heat recovery and utilization system of this embodiment is used as a chemical heat pump system, i.e., a heat pump mode, will next be described. For the sake of convenience, the following description is based on the assumption that endothermic unit 3 and gas recovery unit 6 at the same pressure, but it should be noted that, strictly speaking, there is a pressure difference between these them (the pressure inside endothermic unit 3 is greater than the pressure inside gas recovery unit 6) in order to transfer the gas reactant. Similarly, strictly speaking, exothermic unit 2 and gas supply unit 7 are not at the same pressure, and it should be noted that there is a pressure difference between them (the pressure inside exothermic unit 2 is less than the pressure inside gas supply unit 7) in order to transfer the gas reactant.

First, endothermic unit 3 that is at first pressure P₁ receives heat from an outside heat source to perform the endothermic reaction in the slurry contained in endothermic unit 3. In this case, first pressure P₁ is a pressure at which the endothermic reaction can be caused by the heat from the outside heat source. Through this endothermic reaction, the solid product in the slurry is separated into the solid reactant and the gas reactant. The separated solid reactant flows through first circulation line 21 as a slurry including the solid reactant that is suspended/dispersed in the liquid phase, and is pressurized to second pressure P₂ that is higher than first pressure P₁ by circulation pump 21a to be supplied to exothermic unit 2.

On the other hand, the decomposed gas reactant flows through gas recovery line 11 and is captured and recovered by the liquid or slurry capture element in gas recovery unit 6 that is at first pressure P₁. The capture element that has captured the gas reactant flows through transfer line 13 and is pressurized by transfer pump 13a to second pressure P₂ to be transferred to gas supply unit 7.

The capture element that has been transferred to gas supply unit 7 receives heat from the outside heat source to release the gas reactant. The capture element that has released the gas reactant flows through return line 14 is depressurized to first pressure P₁ by return valve 14a to be returned to gas recovery unit 6, while the released gas reactant flows through gas supply line 12 to be supplied to exothermic unit 2 that is at second pressure P₂.

The supply of the gas reactant to exothermic unit 2 causes the exothermic reaction in the slurry contained in exothermic unit 2. In this case, the exothermic reaction is performed at second pressure P₂ higher than first pressure P₁ at which the endothermic reaction is performed, and therefore generates heat at a temperature higher than the temperature of the heat that has been absorbed through the endothermic reaction. Thus, heat at a temperature higher than the temperature of the heat supplied from the outside heat source can be extracted. The temperature of the extracted heat is determined by the characteristics of the reactants and the pressure of exothermic unit 2 that is adjusted to second pressure P₂.

The solid product produced through the exothermic reaction in exothermic unit 2 flows through second circulation line 22 as a slurry including the solid product that is suspended/dispersed in the liquid phase, and is depressurized to first pressure P₁ by circulation valve 22a to be supplied to endothermic unit 3. The endothermic reaction is then performed again in endothermic unit 3.

A series of processes is thus performed repeatedly to continuously and stably cause the exothermic reaction in exothermic unit 2 and the endothermic reaction in endothermic unit 3. Accordingly, in contrast to a batch-type operation in which the exothermic and endothermic reactions are performed alternately, the exothermic reactions and endothermic reactions need not be respectively performed in two reactors in an alternating manner in order to continuously operate the system, and heat loss that may occur when switching between the reactions, can be prevented. As a result, heat can be extracted from the system continuously and stably.

In this heat pump mode, the reaction temperature in exothermic unit 2 is higher than that in the endothermic unit, and therefore the temperature of the slurry containing the solid product that is produced in exothermic unit 2 is also higher than that of the slurry containing the solid reactant that is decomposed in endothermic unit 3. For this reason, between exothermic unit 2 and endothermic unit 3, heat exchanger 23 is preferably provided, as shown in the figure. Such heat exchanger 23 enables heat exchange between the slurry flowing through first circulation line 21 and the slurry flowing through second circulation line 22 so that heat loss, that may occur if the slurries are directly circulated, can be reduced to promote the efficiency of the overall system. In addition, the circulation amount of the slurry circulating between exothermic unit 2 and endothermic unit 3 is preferably adjusted, by at least one from among circulation pump 21a and circulation valve 22a, according to the amount of heat supplied from the outside heat source to endothermic unit 3. This is advantageous in that heat from the outside heat source can be efficiently used to extract heat from endothermic unit 3. Alternatively, the circulation amount of the slurry circulating between exothermic unit 2 and endothermic unit 3 may also be adjusted, by at least one from among circulation pump 21a and circulation valve 22a, according to the amount of heat required by the outside device that utilizes heat from exothermic unit 2.

There is also a temperature difference between the reaction temperature (gas capture temperature) in gas recovery unit 6 and the reaction temperature (gas release temperature) in gas supply unit 7. If this temperature difference is too large to ignore, heat exchanger 15 may also be provided between gas recovery unit 6 and gas supply unit 7.

### (Heat Storage/Release Mode)

An operating mode when the heat recovery and utilization system of this embodiment us used as a chemical heat storage system, i.e., a heat storage/release mode, will be described below. The heat storage/release mode consist of three modes: a heat storage mode, a heat release mode, and a continuous mode.

In the heat storage mode, endothermic unit 3 receives heat from an outside heat source to perform the endothermic reaction in the slurry contained in endothermic unit 3. Through this endothermic reaction, the solid product in the slurry is separated into the solid reactant and the gas reactant. The separated solid reactant flows through first circulation line 21 as a slurry including the solid reactant is suspended/dispersed in the liquid phase to be supplied to exothermic unit 2. On the other hand, the decomposed gas reactant flows through gas recovery line 11 and is captured and recovered by the liquid or slurry capture element in gas recovery unit 6. Thus, the heat supplied from the outside heat source can be stored in the system.

In the heat release mode, the capture element that has captured the gas reactant in gas recovery unit 6 is transferred to gas supply unit 7 through transfer line 13, and then receives heat from the outside heat source to release the gas reactant. The released gas reactant is supplied to exothermic unit 2 through gas supply line 12, thereby performing the exothermic reaction in the slurry contained in exothermic unit 2. Thus, heat can be extracted from the system. The capture element that has released the gas reactant in gas supply unit 7 is then returned to gas recovery unit 6 through return line 14. The solid product that has been produced in exothermic unit 2 flows through second circulation line 22 as a slurry including the solid product is suspended/dispersed in the liquid phase to be supplied to endothermic unit 3.

In the continuous mode, the heat storage mode and heat release mode are performed simultaneously and continuously. In other words, in the continuous mode, the same processes as those in the heat pump mode are performed with the exception that a pressure difference is not applied between exothermic unit 2 and endothermic unit 3 (and between gas recovery unit 6 and gas supply unit 7). In this case, the flow rate of the gas reactant supplied to exothermic unit 2 is adjusted to be constant either by a valve (not shown in the figure) provided in gas supply line 12 or by adjusting the amount of the gas reactant generated in (i.e. supplied from) gas supply unit 7 to be constant. As a result, the output power of exothermic unit 2 is kept constant, and therefore uniform and high-quality heat can be extracted from the system even when the amount of heat supplied from the outside heat source fluctuates. As the method of adjusting the flow rate of the gas reactant supplied to exothermic unit 2 to be constant, a method carried out by adjusting the amount of the gas reactant generated in gas supply unit 7 is advantageously used because, compared to a method carried out by the valve provided in gas supply line 12, the pressure of the gas reactant generated in gas supply unit 7 can be reduced. The output power of exothermic unit 2 can also be adjusted by adjusting the amount of the slurry supplied from endothermic unit 3 to exothermic unit 2, instead of adjusting the flow rate of the gas reactant supplied to exothermic unit 2.

According to the heat recovery and utilization system 1 of this embodiment, both the exothermic and endothermic reactions can be performed in the slurry regardless of the operating mode. As a result, even if pulverization or volume expansion of the solid reactant occurs, an efficient and stable heat transfer with respect to the outside can be achieved through the slurry, and therefore the system with good efficiency and stability can be provided.

In the above-described embodiment, gas recovery unit 6 and gas supply unit 7 are provided as separate units. However, these units may be integrated into one unit. In particular, in the three modes of the heat storage/release mode, gas recovery unit 6 and gas supply unit 7 may be integrated into one unit to recover and retain, as a gas, the gas reactant that has been decomposed in endothermic unit 3 and then to supply it to exothermic unit 2 as necessary. Alternatively, in the heat storage mode and the heat release mode of the heat storage/release mode, gas recovery unit 6 and gas supply unit 7 need not recover and supply the gas reactant continuously, and may recover and supply the gas reactant in a batch manner. In other words, gas recovery unit 6 and gas supply unit 7 may be integrated into one unit to recover and supply the gas reactant alternately. A known batch-type adsorption/desorption device can be used as this unit.

### Reference Signs List

- 1: Heat recovery and utilization system
- 2: Exothermic unit
- 3: Endothermic unit
- 4: Gas recovery/supply unit
- 5: Circulation unit
- 6: Gas recovery unit
- 7: Gas supply unit
- 8: Transfer unit
- 11: Gas recovery line
- 12: Gas supply line
- 13: Transfer line
- 13a: Transfer pump
- 14: Return line
- 14a: Return valve
- 15: Heat exchanger
- 21: First circulation line
- 21a: Circulation pump
- 22: Second circulation line
- 22a: Circulation valve
- 23: Heat exchanger

## Claims

1. A chemical heat pump system based on an exothermic reaction that produces a solid product from a solid reactant and a gas reactant and an endothermic reaction that decomposes the solid product into the solid reactant and the gas reactant, the chemical heat pump system comprising:
an endothermic unit that contains a slurry containing the solid product and that absorbs heat supplied from an outside to perform the endothermic reaction at a first pressure;
an exothermic unit that contains a slurry containing the solid reactant and that performs the exothermic reaction at a second pressure that is higher than the first pressure to generate heat;
a gas recovery/supply unit that recovers the gas reactant that has been decomposed in the endothermic unit and that supplies the recovered gas to the exothermic unit; and
a circulation unit that supplies the slurry containing the solid reactant, that has been decomposed in the endothermic unit, to the exothermic unit after pressurizing the slurry from the first pressure to the second pressure, and that supplies the slurry containing the solid product, that has been produced in the exothermic unit, to the endothermic unit after depressurizing the slurry from the second pressure to the first pressure, so as to circulate the slurry between the endothermic unit and the exothermic unit.

2. The chemical heat pump system according to claim 1, wherein the circulation unit includes:
a first circulation line that supplies the slurry containing the solid reactant that has been decomposed in the endothermic unit, to the exothermic unit;
a circulation pump that is provided in the first circulation line and that pressurizes the slurry flowing through the first circulation line from the first pressure to the second pressure;
a second circulation line that supplies the slurry containing the solid product that has been produced in the exothermic unit, to the endothermic unit; and
a circulation valve that is provided in the second circulation line and that depressurizes the slurry flowing through the second circulation line from the second pressure to the first pressure.

3. The chemical heat pump system according to claim 2, wherein the circulation unit further includes a heat exchanger that exchanges heat between the slurry flowing through the first circulation line and the slurry flowing through the second circulation line.

4. The chemical heat pump system according to claim 2 or 3, wherein at least one from among the circulation pump and the circulation valve allows a circulation amount of the slurry between the endothermic unit and the exothermic unit to be adjusted, according to the amount of heat supplied from an outside heat source to the endothermic unit or according to the amount of heat required by an outside device that utilizes heat from the exothermic unit.

5. The chemical heat pump system according to any one of claims 1 to 4, wherein the gas recovery/supply unit includes:
a gas recovery unit that recovers, as a liquid or slurry, the gas reactant that has been decomposed in the endothermic unit;
a gas supply unit that supplies, as a gas, the gas reactant that has been recovered as a liquid or slurry in the gas recovery unit, to the exothermic unit; and
a transfer unit that transfers the gas reactant that has been recovered as a liquid or slurry in the gas recovery unit to the gas supply unit.

6. The chemical heat pump system according to claim 5, wherein the gas recovery unit recovers the gas reactant that has been decomposed in the endothermic unit by absorbing the gas reactant into an absorbing liquid, and the gas supply unit separates the gas reactant from the absorbing liquid and then supplies the gas reactant to the exothermic unit.

7. The chemical heat pump system according to claim 5, wherein the gas recovery unit recovers the gas reactant that has been decomposed in the endothermic unit by adsorbing the gas reactant to a liquid or slurry adsorbent, and the gas supply unit desorbs the gas reactant from the adsorbent and then supplies the gas reactant to the exothermic unit.

8. The chemical heat pump system according to claim 5, wherein the gas recovery unit recovers the gas reactant that has been decomposed in the endothermic unit by reaction of the gas reactant with a liquid or slurry reactant to produce a liquid or slurry product, and the gas supply unit decomposes the product into the gas reactant and then supplies the gas reactant to the exothermic unit.

9. The chemical heat pump system according to any one of claims 5 to 8, wherein the transfer unit includes:
a transfer line that transfers a capture element that has recovered the gas reactant in the gas recovery unit to the gas supply unit;
a return line that returns the capture element that has released the gas reactant in the gas supply unit to the gas recovery unit; and
a heat exchanger that exchanges heat between the capture element flowing through the transfer line and the capture element flowing through the return line.

10. The chemical heat pump system according to claim 5, wherein the gas recovery unit recovers the gas reactant that has been decomposed in the endothermic unit by condensing the gas reactant, and the gas supply unit evaporates the condensed gas reactant and then supplies the gas reactant to the exothermic unit.
